# EUROPÄISCHE PATENTSCHRIFT

(11) **EP 3 372 193 B1**
(45) Veröffentlichungstag und Bekanntmachung des Hinweises auf die Patenterteilung: **21.04.2021**
(21) Anmeldenummer: 17159883.2
(22) Anmeldetag: 08.03.2017
(51) Int. Cl.: A61C 13/08, A61C 19/10, A61C 13/00

(54) **VERFAHREN ZUR FESTLEGUNG EINER MATERIALFARBE EINER DENTALRESTAURATION**
METHOD FOR DETERMINING A MATERIAL COLOUR OF A DENTAL RESTORATION
PROCÉDÉ DE DÉTERMINATION D'UNE COULEUR DE MATÉRIAU D'UNE RESTAURATION DENTAIRE

(43) Veröffentlichungstag der Anmeldung: 12.09.2018
(73) Patentinhaber: Ivoclar Vivadent AG, 9494 Schaan (LI)
(72) Erfinder: SPECHT, Tobias, 9491 Ruggell (LI); VOIGT, Oliver, 8854 Galgenen (CH); MÜLLER, Michael, 6840 Götzis (AT); KERSCHBAUMER, Harald, 6833 Klaus (AT)
(74) Vertreter: Baronetzky, Klaus

(56) Entgegenhaltungen:
- EP-A1- 2 774 578
- JP-A- 2005 176 915
- US-A1- 2006 177 792
- US-A1- 2009 133 260

## Beschreibung

Die Erfindung betriff ein Verfahren zur Festlegung einer Materialfarbe einer Dentalrestauration.

Es ist seit langem bekannt, sogenannte Zahnschlüssel zu verwenden, bei denen typischerweise eine Mehrzahl von Zahnfarben in Form von Musterzähnen verwendet werden können, um die optimale Zahnfarbe des Dentalrestaurationsmaterials zu bestimmten. Hierzu wird ein Nachbarzahn des zu behandelnden Zahns als Grundlage verwendet, oder gegebenenfalls auch die Farbe beider Nachbarzähne. Der Musterzahn wird mit diesem oder diesen visuell verglichen und der passendste Musterzahn von beispielsweise 16 Musterzähnen wird ausgewählt. Typischerweise sind die Zahnfarbe gruppiert in die Kategorien A = rötlich-bräunlich, B = rötlich-gelblich, C = Grautöne und D = rötlich-grau, wobei eine Helligkeitsabstufung je von 1 bis 4 erfolgt, also A1 = hell rötlich-braun und A4 = dunkel rötlich-braun.

Es ist bekannt, dass ein derartiger Vergleich über Zahnschlüssel nicht immer zu optimalen Ergebnissen führt. Beispielsweise ist die Beleuchtungssituation relevant für die Beurteilung der Farbähnlichkeit, und die Beleuchtungsituation ist je nach Umgebung stark unterschiedlich, wobei auch eine Rolle spielt, ob künstliches Licht, Tageslicht oder eine Mischform verwendet wird.

Es sind zahlreiche Versuche vorgenommen worden, die Zahnfarbe des Dentalrestaurationsmaterials mit einem verbesserten Ergebnis auszusuchen, meist, indem die Ziel-Zahnfarbe, also die Zahnfarbe der Nachbarzähne, genauer analysiert wird, gegebenenfalls über Scanner. Man hat versucht, insofern computergestützt ein verbessertes Ergebnis zu erreichen. Hierzu ist beispielsweise auf die Lösung gemäß der US 6,345,984 B2 zu verweisen.

Eine demgegenüber deutliche Verbesserung ist der EP 2 255 749 B1 zu entnehmen. Bei dieser Lösung wird ein dentaler Farbschlüssel verwendet, wie auch bereits gemäß der DE 10 509 830 C2. Durch die unmittelbar benachbarte Anordnung fallen unterschiedliche Licht-Einfallswinkel weniger ins Gewicht

Aus US2006177792A1 ist ein Verfahren zur Festlegung einer Materialfarbe einer Dentalrestauration bekannt, welches die gewünschte Zielfarbe, die Farbe der Basisstruktur und die Dicke der Restauration mittels einer Kalkulationseinheit berücksichtigt.

Dennoch besteht der Bedarf, die Zahnfarbenbestimmung zu optimieren, insbesondere auch, da bei unterschiedlichen Patienten auch bei der gleichen Ziel-Zahnfarbe die Zahnfarbenbestimmung unterschiedlich erfolgreich ist.

Demgegenüber liegt der Erfindung die Aufgabe zu Grunde, ein Verfahren zur Festlegung einer Materialfarbe einer Dentalrestauration zu schaffen, das Nachteile der bekannten Lösungen vermeidet und patientenspezifisch optimiert ist.

Diese Aufgabe wird erfindungsgemäß durch Anspruch 1 gelöst. Vorteilhafte Weiterbildungen ergeben sich aus den Unteransprüchen.

Über bestimmte Parameter wie die Ziel-Zahnfarbe, also die Zahnfarbe des Nachbarzahns, hinausgehend werden erfindungsgemäß weitere Parameter bereitgestellt und automatisch die Materialfarbe optimiert festgelegt oder zumindest vorgeschlagen.

Ein weiterer wichtiger Parameter insofern ist die Farbe eines Stumpfes - oder eines Abutments -, welches Abutment insofern äquivalent zu einem Stumpf wirkt.

Die der Dentalrestauration ist besonders wichtig, offenbar hat diese auch ein besonders großen Einfluss auf die Farbwirkung. Gleiche Ziel-Zahnfarbe und gleiche Stumpffarbe vorrausgesetzt hat beispielsweise eine Dentalrestauration mit einer Schichtstärke von 0,3 mm dann eine erheblich andere Farbwirkung als eine Dentalrestauration mit einer Schichtstärke von 1,5 mm, wenn sich Stumpffarbe und Ziel-Zahnfarbe deutlich voneinander unterscheiden.

Dies wird automatisch berücksichtigt, und überraschend ergibt sich insofern eine wesentlich verbesserte und naturnähere Festlegung der Zahnfarbe des Dentalrestaurationsmaterials.

Das erfindungsgemäße Verfahren lässt sich beispielsweise in Form eines Programms einer CAD/CAM-Software oder separat von dieser auf einem Computer darstellen. Besonders bevorzugt ist jedoch die Realisierung als App auf einem Tablet oder Smartphone.

Über die Erfassung der Schichtstärke der Dentalrestauration wird auch die Transluzenz bei Materialien wie Vollkeramik oder Komposit besonders stark berücksichtigt; auch die insofern bestehenden Unterschiede werden besonders bevorzugt berücksichtigt.

In bevorzugter Weise wird eine fakultative Hellverschiebung vorgenommen. Hierzu sei auf folgendes Beispiel verwiesen: Die Ziel-Zahnfarbe zeigt A2. Die Stumpfarbe des präparierten Zahns sei A4. Typischerweise wird nun als Farbe des Dentalrestaurationsmaterials A2 gewählt, da diese Farbe auch der Ziel-Zahnfarbe entspricht. Durch den Einfluss der recht dunklen Stumpffarbe verschiebt sich jedoch die Farbwirkung der Dentalrestauration und das Ergebnis entspricht eher der Zahnfarbe A3.

Das Ergebnis ist dann unbefriedigend, da es so gut wie unmöglich ist, zu dunkle Restaurationen in Richtung hell zu korrigieren.

Es wird jedoch in solchen Situationen in Abhängigkeit von der Schichtstärke als Materialfarbe des Dentalrestaurationsmaterials von vorne herein A1 vorgeschlagen oder gewählt, insbesondere bei dünneren Schichtstärken. Bei einer Schichtstärke von 1,5 mm und weniger transluzenten Materialen wird jedoch A2 beibehalten.

Ein Vorteil der Hellverschiebung besteht darin, dass bei Bedarf auch eine Farbanpassung über eine Maltechnik nach Fertigstellung der Restauration möglich ist.

Besonders günstig ist es, dass die heute verwendenten monolithischen und transluzenten Materialien gerade auch mit unterschiedlichen Schichtstärken eine optimierte Farbwahl erlauben. Typischerweise liegt bei neueren Restaurationen keine opake Gerüststruktur vor, und es wird ein besonders transluzentes Material gewählt. Die Restauration soll "ätherisch" wirken und hat dementsprechend eine wesentlich verbesserte optische Anmutung als die früheren überwiegend festsitzenden Restaurationen mit voll verblendeten Gerüststrukturen.

Gerade bei derartigen neueren Dentalrestaurationen ist jedoch die Berücksichtigung der Zusatzparameter wie der Transluzenz und damit indirekt der Schichtstärken besonders wichtig.

Neben den Parametern Ziel-Zahnfarbe, Stumpffarbe bzw. Abutmentfarbe, Indikation bzw. Restaurationsart, Schichtstärke bzw. Präprationstiefe, Materialwahl kann auch die Verarbeitungstechnik als weiterer Parameter eingesetzt werden, also beispielsweise die Poliertechnik, die Maltechnik, Cut-Back, und die Schichttechnik, und als letzer Paramenter schließlich das Befestigungsmaterial.

Durch die Farbwahl des Befestigungsmaterials lassen sich minimale Farbdifferenzen gerade bei transluzenten Restaurationen erzeugen; eine komplette Farbänderung ist hierdurch nicht möglich.

Das Material und die Verarbeitungstechnik hat hingegen einen recht großen Einfluss, gerade, nachdem es über die Transluzenz der Dentalrestauration entscheidet.

Im Zusammenhang mit der Erfindung ist es günstig, nicht nur die Zahnfarben nach den üblichen Schemen zu gruppieren, sondern auch die Stumpffarben oder Abutment-Farben. Hierzu besteht der sogenannte ND-Farbschlüssel mit ND1 als hellster Stumpffarbe und ND9 als dunkelster Stumpffarbe.

Ein besonderer Vorteil der Erfindung besteht auch darin, dass programmgesteuert bestimmte ästhetisch unbefriedigende Kombinationen von vorne herein als solche markiert sind oder gesperrt sind. Wenn beispielsweise eine Stumpffarbe wie ND8 mit der Zielfarbe A1 kombiniert werden soll, wird mit dem erfindungsgemäßen Verfahren angezeigt, dass dies selbst bei maximaler Schichtstärke und materialunabhängig nicht möglich ist oder zu unbefriedigenden Ergebnissen führt. In diesem Fall kann der Benutzer darauf hingewiesen werden, dass sich die Verwendung eines Opakers empfiehlt.

Besonders günstig ist es, dass basierend auf einem visuellen, also einen Augenscheinvergleich, die Transluzenz berücksichtigt wird. Digitale und elektronische Farbmessungen ermöglichen es derzeit nicht, Transluzenzen zuverlässig zu messen.

Nachdem erfindungsgemäß die empirische Vorfestlegung der optimalen Zahnfarbe der Dentalrestauration basierend auf der Vielzahl der Parameter bei gleichen Bedingungen festgelegt und einprogrammiert worden ist, lassen sich menschliche Fehlentscheidungen aufgrund unterschiedlicher Beleuchtungssituationen eliminieren.

Die sichere Materialwahl erhöht zudem die Wahrscheinlichkeit, dass die Restauration auch farblich dem Wunsch des Patienten bzw. des Zahnarztes entspricht.

Weitere Vorteile, Einzelheiten und Merkmale ergeben sich aus der nachfolgenden Beschreibung mehrerer Ausführungsbeispiele anhand der Zeichnungen:
Es zeigen:
   - Fig. 1: ein Wahlschema innerhalb eines Computerprogramms eines erfindungsgemäßen Verfahrens in einer Ausführungsform;
   - Fig. 2: eine Auswahlansicht für eine Ziel-Zahnfarbe in der Ausführungsform gemäß Fig. 1;
   - Fig. 3: eine Ansicht gemäß Fig. 2, jedoch unter Darstellung anderer Ziel-Zahnfarben;
   - Fig. 4: eine Ansicht gemäß Fig. 2, wobei jedoch bereits eine Zahnfarbe ausgewählt ist und die Indikation zur Auswahl ansteht;
   - Fig. 5: eine Ansicht gemäß den Figuren 2 bis 4, wobei sowohl Zahnfarbe als auch Indikation ausgewählt sind und die Stumpffarbe zur Auswahl ansteht;
   - Fig. 6: eine Ansicht gemäß den Figuren 2 bis 5, wobei Zahnfarbe, Indikation und Stumpffarbe ausgewählt sind und die Schichtstärke zur Auswahl ansteht;
   - Fig. 7: eine Ansicht gemäß den Figuren 2 bis 6, wobei Zahnfarbe, Indikation, Stumpffarbe und Schichtstärke ausgewählt sind und das Material zur Auswahl ansteht;
   - Fig. 8: eine Darstellung eines Ergebnisfeldes, wobei gemäß der Darstellung keine geeignete Auswahl besteht, so dass kein Ergebnis vorliegt;
   - Fig. 9: eine Darstellung des Ergebnisfeldes gemäß Fig. 8, wobei ein Ergebnis dargestellt ist;
   - Fig. 10: eine Darstellung eines Informationsfeldes zu Fig. 9, das die Parameter des Ergebnisses wiedergibt;
   - Fig. 11: eine Darstellung eines Auswahlbildschirms gemäß den Figuren 2 bis 7, wobei die Schichtstärke zur Auswahl ansteht und bislang keine weitere Auswahl getroffen wurde;
   - Fig. 12: eine Darstellung gemäß Fig. 11, wobei die Stumpffarbe zur Auswahl ansteht und bislang keine weitere Auswahl getroffen wurde; und
   - Fig. 13: eine Darstellung gemäß den Figuren 11 und 12, wobei die Stumpffarbe ND3 ausgewählt wurde und nunmehr die Zahnfarbe zur Auswahl ansteht.

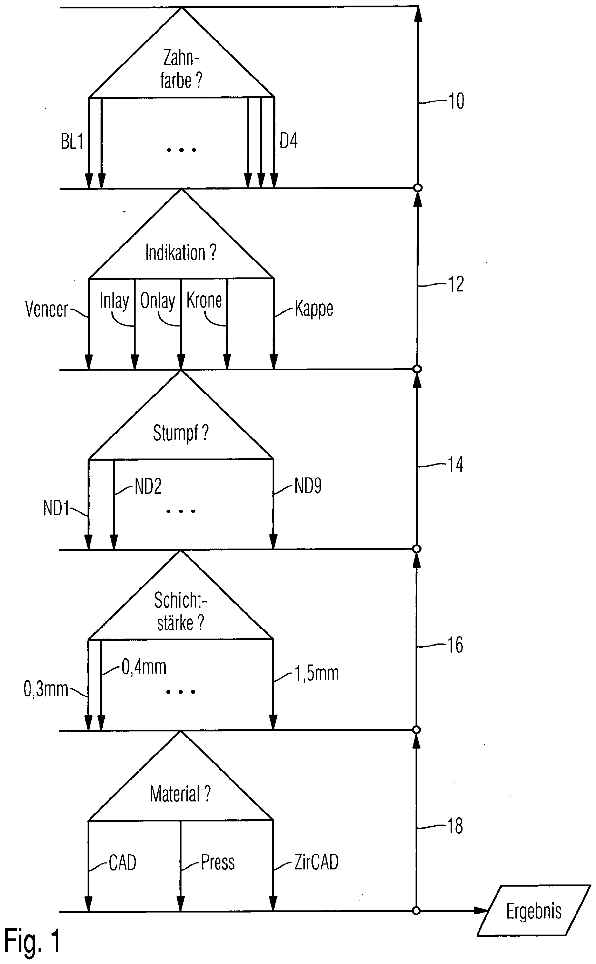

In Fig. 1 ist ein mögliches Ablaufschema des Programms für die Bereitstellung des erfindungsgemäßen Verfahrens dargestellt. Der hier dargestellte Programmteil betrifft die Auswahl der Parameter, im Beispielsfalle der folgenden Parameter: Ziel-Zahnfarbe, Indikation oder Art der Dentalrestauration, Stumpffarbe, Stärke der Restaurationsschicht sowie das verwendete Material.

Bei Anwahl des Parameterfeldes Zahnfarbe besteht die Möglichkeit, aus zahlreichen möglichen Ziel-Zahnfarben auszuwählen. Hierzu gehören die Zahnfarben BL1 bis BL4, A1 bis A4, B1 bis B4, C1 bis C4 sowie D2 bis D4, insgesamt also 20 Zahnfarben, die in an sich bekannter Weise entsprechend den Buchstaben gruppiert sind. Für die Auswahl der Zahnfarbe steht je ein entsprechendes Auswahlfeld zur Verfügung, das zu der Zahnform die betreffende Zahnfarbe wiedergibt.

Der Benutzer, also beispielsweise der Zahnarzt, ermittelt entweder anhand eines Zahnschlüssels oder eines Minifarbschlüssels gemäß der EP 2 255 749 B1 die Zahnfarbe des Nachbarzahns oder der Nachbarzähne.

Alternativ kann bei Realisierung des erfindungsgemäßen Verfahrens über ein Tablet oder ein Smartphone auch kurzerhand das betreffende angezeigte Zahnfarbenfeld neben den Zahn gehalten werden, um eine visuelle Abschätzung zu ermöglichen.

Im Falle von Smartphones oder Tablets lassen sich die fraglichen Felder in an sich bekannter Weise per Touchscreen anwählen, wobei es sich versteht, dass anstelle dessen auch eine Ansteuerung über eine Maus möglich ist, insbesondere bei Realisierung als separates oder integriertes Programm auf einem Computer, der auch für das CAD-Design bestimmt ist.

Ein wesentliches Element des erfindungsgemäßen Verfahrens ist das automatische Anbieten. Wenn also ein Parameter wie die Zahnfarbe ausgewählt ist, springt die Auswahlmöglichkeit unmittelbar weiter zum nächsten Parameter und bietet die dann dort noch bestehenden Parameter an. Etwaige ausgeschlossene Auswahlmöglichkeiten werden beispielsweise ausgegraut angezeigt, oder es wird in anderer Weise deutlich gemacht, dass diese nicht zur Auswahl zur Verfügung stehen.

Entsprechend dem Gegenpfeil 10 gemäß Fig. 1 besteht aber auch die Möglichkeit, unmittelbar nach der Auswahl der Zahnfarbe erneut eine geänderte Zahnfarbe zu wählen. Hierzu tippt der Benutzer kurz erneut auf das Parameterfeld "Zahnfarbe". Das hier angewählte Parameterfeld, das die Auswahl der Auswahlmöglichkeiten erlaubt, ist durch eine geeignete Markierung als aktiv gekennzeichnet.

Wenn keine erneute Korrektur erforderlich ist, wird der Benutzer automatisch zum nächsten Feld weitergeführt. Dies ist im dargestellten Ausführungsbeispiel die Indikation, wobei die Auswahlmöglichkeiten "Veneer", "Inlay", "Onlay", "Krone" und "Kappe" bestehen. Grundsätzlich gelten diese Auswahlmöglichkeiten für alle Zahnfarben, so dass insofern keine Einschränkungen bzw. entsprechende Ausgrauungen vorgesehen sind.

Auch hier besteht die Möglichkeit, eine Korrektur vorzunehmen, entsprechend dem Gegenpfeil 12. Der Benutzer kann auch wiederum erneut zur Zahnfarbe zurück gehen und insofern den Gegenpfeilen 12 und dann 10 folgen.

Wenn keine Korrekturen erwünscht sind, stellt sich automatisch die nächste Parameterauswahlmöglichkeit ein, im vorliegenden Fall die Stumpffarbe. Hier besteht die Möglichkeit zwischen der hellen Stumpffarbe ND1 und der dunklen Stumpffarbe ND9 zu wählen, aber auch die dazwischenliegenden Stumpffarben ND2 bis ND8 auszuwählen.

Auch hier besteht wiederum sinngemäß die gleiche Korrekturmöglichkeit, indem der Ausführungspfad gemäß dem Gegenpfeil 14 gefolgt wird.

Die nächste Auswahlmöglichkeit trifft die Schichtstärke der Dentalrestauration. Hier liegen bereits erhebliche Einschränkungen vor, wenn die Indikation gewählt ist. So lassen sich Veneers zwar in der Stärke zwischen 0,3 mm und 1,5 mm, also mit allen 12 Auswahlmöglichkeiten festlegen. Inlays oder Onlays können jedoch nur mit einer minimalen Tiefe von 1,0 mm bereitgestellt werden, so dass hier lediglich die 6 Auswahlmöglichkeiten von 1,0 mm bis 1,5 mm als aktiv dargestellt werden.

Auch bei der Auswahl "Krone" besteht die Möglichkeit, eine Schichtstärke zwischen 1,0 mm und 1,5 mm zu wählen, hingegen nicht darunter. Bei der Indikationsauswahl "Kappe" ist die Auswahl 0,3 mm gesperrt, während die übrigen Auswahlmöglichkeiten zur Verfügung stehen.

Wenn der Benutzer nun im Hinblick auf die angezeigte Auswahl sich gleichsam umentscheidet und beispielsweise eine andere Zahnfarbe auswählt, und insofern den Gegenpfeilen 16, 14, 12 und 10 folgt, bleiben die bisher getroffenen Auswahlen - soweit passend - erhalten, und es werden nun die lediglich hierzu passenden Auswahlmöglichkeiten angeboten.

Dies bedeutet aber, wenn beispielsweise bei der Schichtstärke der Wert 0,3 eingestellt wird und dann bis zum Gegenpfeil 12 zur Indikation zurückgegangen wird, als Auswahl lediglich "Veneer" verbleibt, nachdem bei der Schichtstärke 0,3 ledigich die Indikation "Veneer" zur Verfügung steht.

Wenn keine Korrektur erfolgt, besteht die Möglichkeit, das Material zu wählen, wobei die Materialien CAD, Press und ZirCAD im dargestellten Ausführungsbeispiel zur Verfügung stehen.

Es versteht sich, dass insofern auch beliebige andere Materialien angeboten werden können, beispielsweise auch explizit Komposit, Lithiumdisilicat oder ähnliches.

Auch hier besteht nun die Möglichkeit, entsprechend dem Gegenpfeil 18 die bislang getroffene Auswahl zu ändern.

Wenn sämtliche Auswahlen getroffen sind, was durch entsprechende Markierungen der Parameterfelder angezeigt wird, wird erfindungsgemäß anstelle von Auswahlfeldern die Anzeige des Ergebnisses aktiviert. Hier kann beispielsweise angezeigt werden "Ergebnis generieren", und bei dieser Anwahl wird nun ein Ergebnisbildschirm angezeigt. Der Ergebnisbildschirm zeigt sowohl die gewählte Zahnfarbe in Zahnform an als auch die Materialfarbe, und zusätzlich die Materialfarbenbenennung wie beispielsweise HT BL1 oder dergleichen. "HT" weist auf ein Material mit hoher Transparenz hin. Bezugnehmend auf die Materialfarbe, setzt sich diese aus der Stumpffarbe dem transparenten Zement sowie der Restaurationsfarbe zusammen. Somit wird die Gesamtfarbe der Krone, wie sie sich im Patientenmund darstellt, simuliert.

Zusätzlich hierzu wird entsprechend der Indikation auch das zu erzeugende Dentalrestaurationsmaterial in der ermittelten Materialfarbe symbolisch dargestellt.

In vorteilhafter Ausgestaltung ist es vorgesehen, dass eine bevorzugte Materialfarbe, die Primär-Materialfarbe und zusätzlich eine Sekundär-Materialfarbe, angezeigt wird, und in einer weiteren vorteilhaften Ausgestaltung auch zusätzlich eine freie Auswahlmöglichkeit.

Der Benutzer hat dann die Möglichkeit, die verschiedenen Ergebnisse nebeneinander darzustellen und visuell bzw. durch Vergleich mit der Ziel-Zahnfarbe zu optimieren.

In weiterer vorteilhafter Ausgestaltung ist es auch möglich, basierend auf dem ermittelten Ergebnis entweder eine Korrektur vorzunehmen, die zu Grunde liegenden Parameter darzustellen, das Ergebnis auszudrucken oder zu versenden.

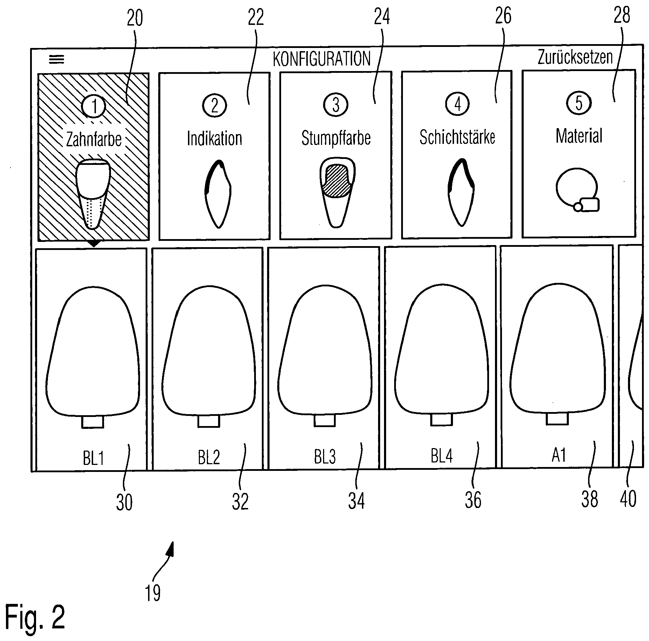

Ein Auswahlbildschirm 19 ist in Fig. 2 dargestellt. Im oberen Bereich des Auswahlbildschirms finden sich Parameterfelder 20, 22, 24, 26 und 28, die mit "Zahnfarbe", "Indikation", "Stumpffarbe", "Schichtstärke" und "Material" beschriftet sind. Das je aktive Parameterfeld, im vorliegenden Zustand das Parameterfeld 20 ist markiert oder dunkel hinterlegt. Im unteren Bereich des Auswahlbildschirms 19 finden sich Auswahlfelder 30 bis 40. Die sichtbaren Auswahlfelder sind wie folgt beschriftet:
Auswahlfeld 30 - BL1
Auswahlfeld 32 - BL2
Auswahlfeld 34 - BL3
Auswahlfeld 36 - BL4
Auswahlfeld 38 - A1

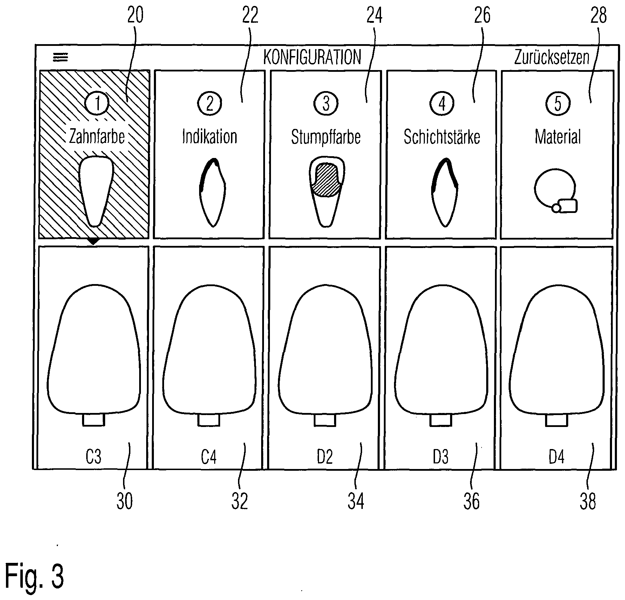

Daneben ist ein Auswahlfeld 40 teilsichtbar, das dem Auswahlfeld A2 entsprechend würde. Durch eine entsprechende Fingergeste "verschieben" lässt sich aus der Sichtfeldleiste der möglichen 19 Zielzahnfarben ein beliebiger Ausschnitt von 5 oder 6 Zahnfarben einblenden, gemäß Fig. 3 die Zahnfarben C3, C4, D2, D3 und D4.

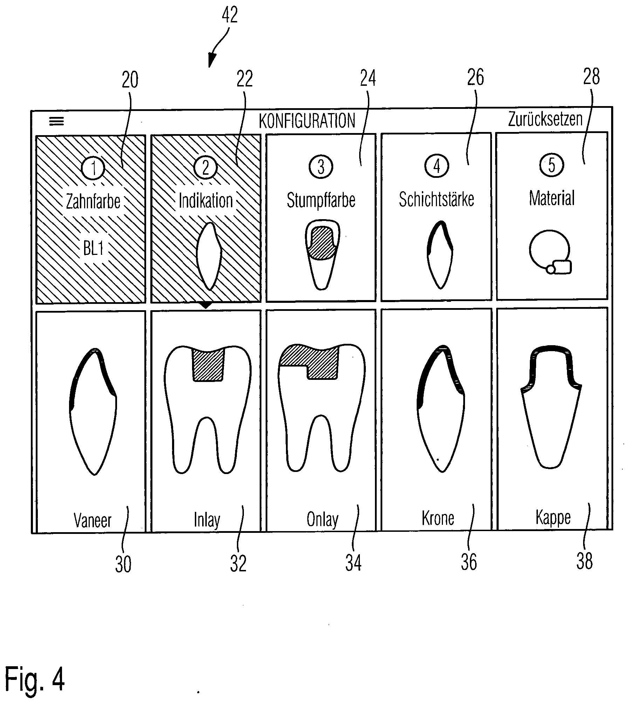

Durch Tippen auf eines der Auswahlfelder wird das betreffende Auswahlfeld angewählt, und ohne weitere Maßnahmen erfolgt umgehend ein Bildschirmwechsel auf den Auswahlbildschirm 42 gemäß Fig. 4. Das Parameterfeld 20 verbleibt dunkel markiert mit der gewählten Zahnfarbe "BL1", und zugleich ist das Parameterfeld 22 markiert, während die Auswahlfelder 24 bis 28 unmarkiert sind.

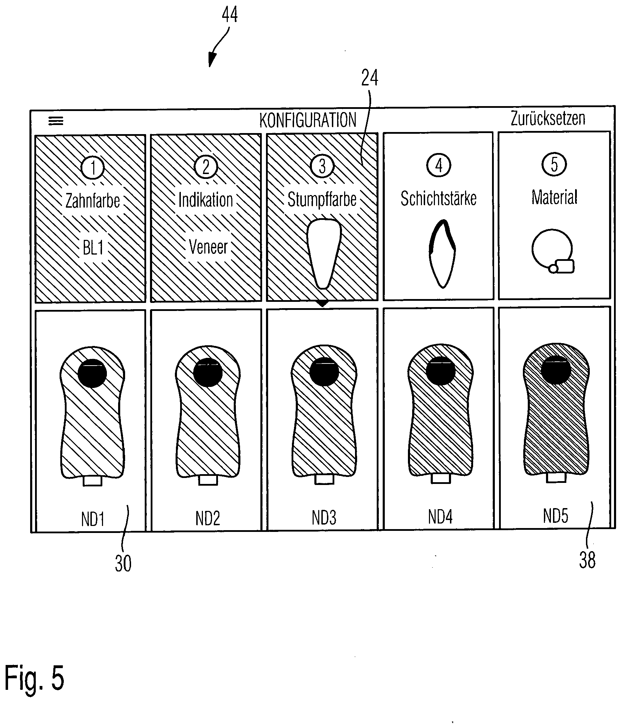

Dementsprechend zeigen die Auswahlfelder 30 bis 38 die unterschiedlichen Indikationen oder Restaurationsarten an, nämlich das Auswahlfeld 30 ein Veneer, das Auswahlfeld 32 ein Inlay, das Auswahlfeld 34 ein Onlay, das Auswahlfeld 36 eine Krone und das Auswahlfeld 38 eine Kappe. Durch Antippen des gewünschten Auswahlfelds wird die Auswahl ausgelöst, und der Auswahlbildschirm 44 gemäß Fig. 5 erscheint. Das Parameterfeld 24 "Stumpffarbe" ist aktiv, und es werden im Bereich der Auswahlfelder 30 bis 38 fünf Stumpffarben angezeigt, im dargestellten Ausführungsbeispiel ND1 bis ND5, wobei es auch möglich ist, durch verschieben zu einer anderen Auswahl bis ND9 zu gelangen.

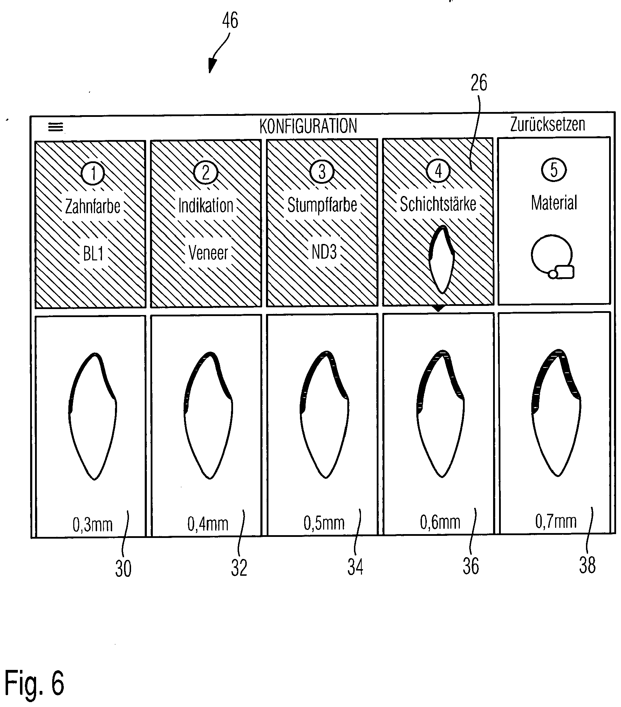

Durch Stumpfauswahl wechselt der Bildschirm erneut zu Fig. 6 mit dem Auswahlbildschirm 46 für die Wahl der Schichtstärke im Parameterfeld 26. Hierbei werden die entsprechend der Indikation möglichen Schichtstärken als aktiv angezeigt und können ausgewählt werden, wobei nicht mögliche Schichtstärken als nicht aktiv und damit ausgegraut angezeigt werden.

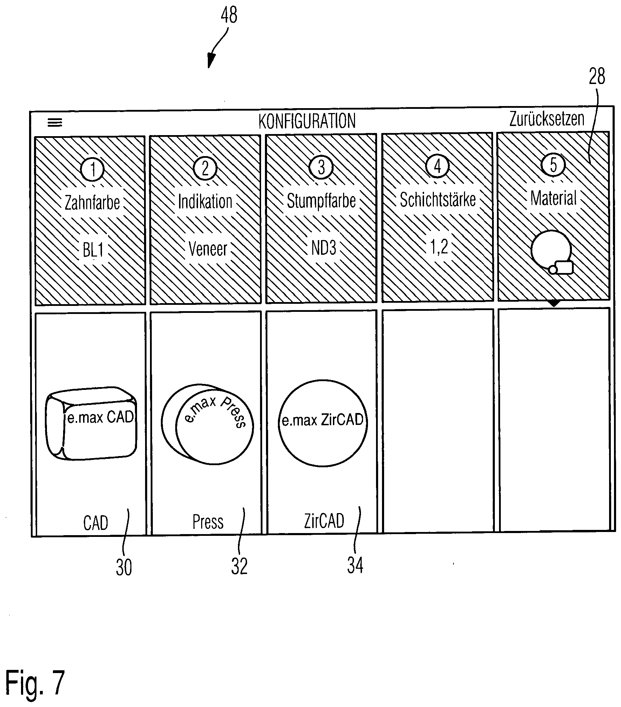

Gemäß dem Auswahlbildschirm 48 in Fig. 7 ist nun noch das zu verwendende Material festzulegen, mit dem Parameterfeld 28, wobei die Möglichkeit CAD, Press und ZirCAD besteht.

Sobald die betreffende Auswahl getroffen wird, erscheint ein nicht dargestellter Zwischenbildschirm, der die Möglichkeit bietet, das Ergebnis zu generieren, wobei aber zusätzlich auch eine Korrektur der Auswahl möglich ist, gemäß den Gegenpfeilen in Fig. 1.

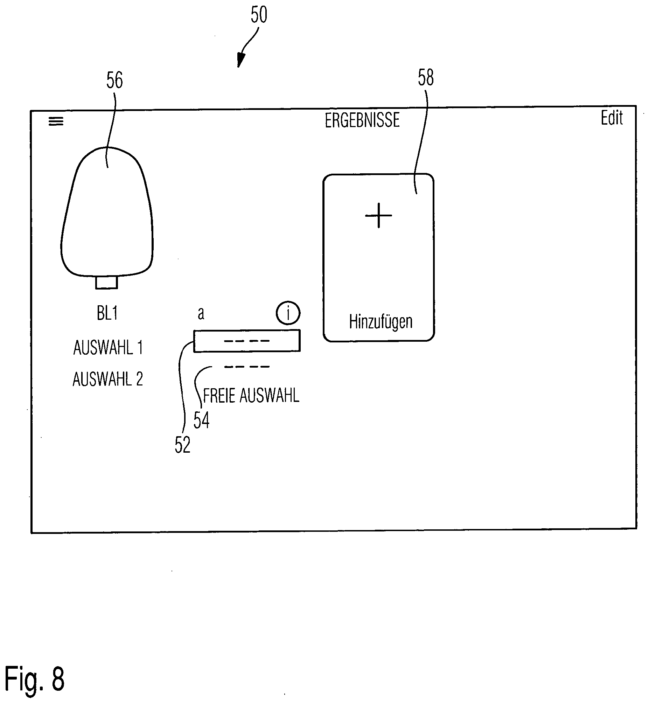

Sobald "Ergebnis generieren" angetippt wird, erscheint der Ergebnisbildschirm gemäß Fig. 8. Im dargestellten Ausführungsbeispiel wurde folgende Kombination ausgewählt: Zahnfarbe BL1, Veneer, ND3 als Stumpffarbe sowie 1,2 als Schichtstärke und "Press" als Material.

Die Stumpffarbe ND3 ist zwar nicht besonders dunkel, lässt sich aber nicht mit BL1 so kombinieren, dass das Ergebnis befriedigend wäre. Daher wird in gemäß Fig. 8 kein Ergebnis angezeigt, weder in dem primären Ergebnisfeld 52 noch im sekundären Ergebnis 54. Hingegen wird im linken Bereich die Ziel-Zahnfarbe 56 sowohl in Buchstaben-/ Zahlen-Kombination als auch als entsprechend geformter und getönter Zahn dargestellt. Über ein Feld 58 "hinzufügen" lässt sich bei Bedarf eine weitere Auswahl vornehmen.

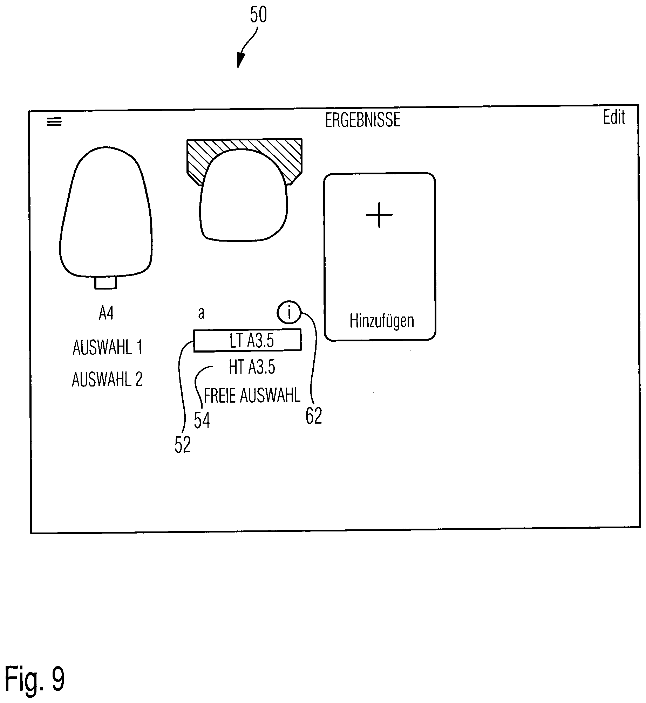

Ein alternativer Ergebnisbildschirm 50 ist in Fig. 9 dargestellt. Hier wurde anstelle der Zahnfarbe BL1 die Zahnfarbe A4 gewählt. Hier besteht die Möglichkeit, eine sinnvolle Restauration in ästhetisch besonders befriedigender Weise vorzunehmen. Als Materialzahnfarbe wird LT A3,5 im primären Ergebnisfeld 52 vorgeschlagen. Im sekundären Ergebnisfeld 54 wird HTA3,5 vorgeschlagen. In einem Bereich 60 ist ein Ergebnisbild dargestellt, das ein Veneer mit der ermittelten Primär-Ergebnisfeld-Zahnfarbe darstellen soll.

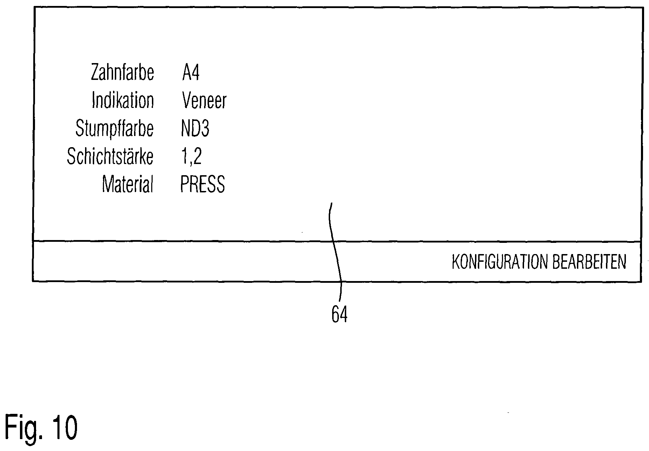

Durch Antippen eines Informationsicons 62 lassen sich zudem die zu Grunde liegenden Parameter gemäß Fig. 10 erneut anzeigen, also A4, Veneer, ND3, 1,2 und Press. Hier kann über ein Feld 64 die Konfiguration bei Bedarf erneut bearbeitet werden.

Beispielhaft sei auf folgende Ergebnisse der folgenden Parameterzusammenstellungen verwiesen:

| Ziel-Zahnfarbe | Indikation | Stumpffarbe | Schichtstärke | Material | Materialfarbe |
|---|---|---|---|---|---|
| A3 | Inlay | ND4 | 0,3 | CAD | nicht möglich |
| A3 | Inlay | ND4 | 0,6 | CAD | nicht möglich |
| A3 | Inlay | ND4 | 1,0 | CAD | HT BL2 |
| A3 | Inlay | ND4 | 1,2 | CAD | HT BL4 |
| A3 | Inlay | ND4 | 1,5 | CAD | HT BL4 |

| Ziel-Zahnfarbe | Indikation Stumpffarbe | | Schichtstärke | Material | Materialfarbe |
|---|---|---|---|---|---|
| A3 | Veneer | ND4 | 0,3 | CAD | nicht möglich |
| A3 | Veneer | ND4 | 0,6 | CAD | nicht möglich |
| A3 | Veneer | ND4 | 0,9 | CAD | MT BL2 |
| A3 | Veneer | ND4 | 1,2 | CAD | MT BL2 |
| A3 | Veneer | ND4 | 1,5 | CAD | MT A1 |

Wie ersichtlich, führt das erfindungsgemäße Verfahren bei größeren Schichtstärke bei primär okklusal vorgesehenen Inlays sowie bei vestibulär sichtbaren Kronen zu dunkleren Materialfarben, da durch die größere Schichtstärke der Stumpf besser abgedeckt werden kann und so weniger Einfluss auf die Gesamtfarbwirkung nimmt.

Zudem lässt sich über das Feld 66 "freie Auswahl" gemäß Fig. 8 und 9 eine beliebige Auswahl aus der Reihe der zur Verfügung stehenden Material-Zahnfarben anzeigen und grafisch darstellen.

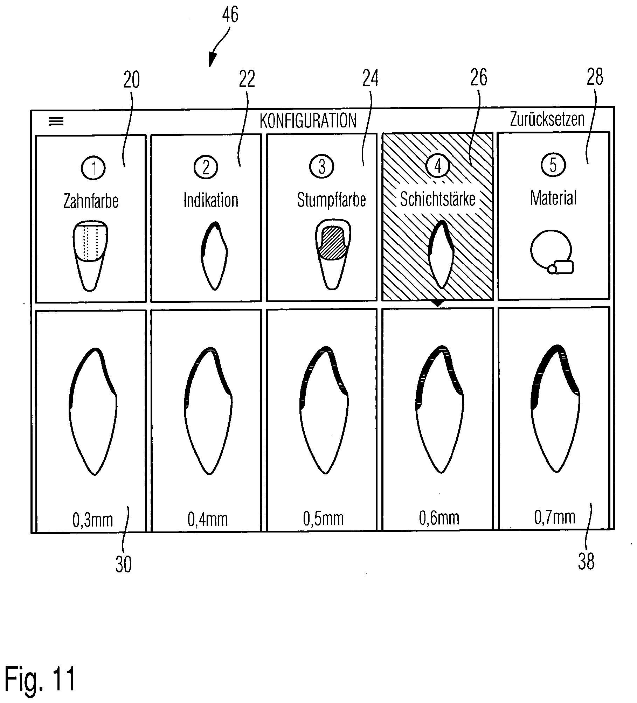

Gemäß Fig. 11 ist ein alternativer Auswahlbildschirm 46 dargestellt. Hier sind die Parameterfelder 20 bis 26 nicht makiert und dementsprechend nicht dunkel. Hingegen ist das Parameterfeld 26 für die Schichtstärke aktiv und dunkel und im Bereich der Auswahlfelder 30 bis 38 sind dementsprechend mögliche Schichtstärken zur Auswahl dargestellt. Ein entsprechender Zustand entsteht, wenn anstelle der Zahnfarbe als erstes die Schichtstärke gemäß dem Parameterfeld 26 angetippt wird. In diesem Zustand ist die Zahnfarbe noch nicht ausgewählt, aber nach Antippen einer gewissen Schichtstärke über die Felder 30 bis 38 erfolgt eine Auswahlmöglichkeit entsprechend dem Auswahlbildschirm 19, wobei natürlich die Schichtstärke gemäß dem Parameterfeld 26 ausgewählt verbleibt.

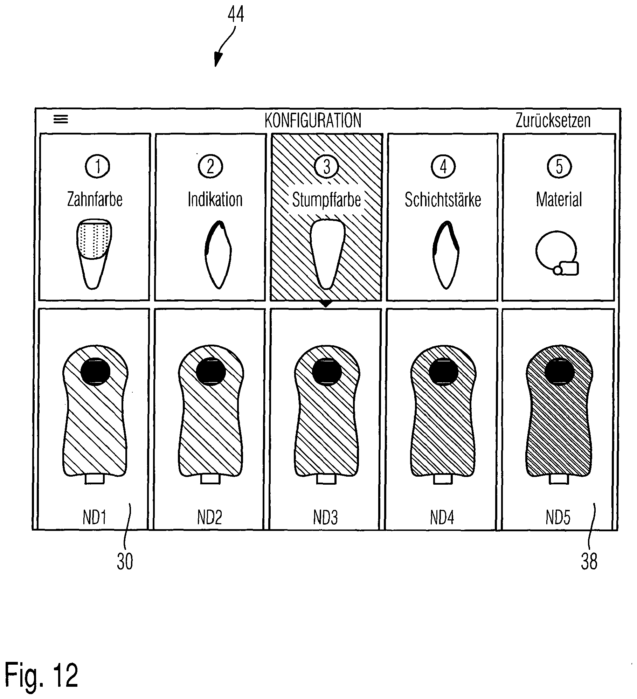

Dies ist sinngemäß in gleicher Weise in Fig. 12 für die Stumpffarbe 44 gemäß dem dortigen Auswahlbildschirm 44 dargestellt. Auch hier ist keiner der anderen Parameter vorfestgelegt, und es besteht die Möglichkeit, zunächst die Stumpffarbe auszuwählen.

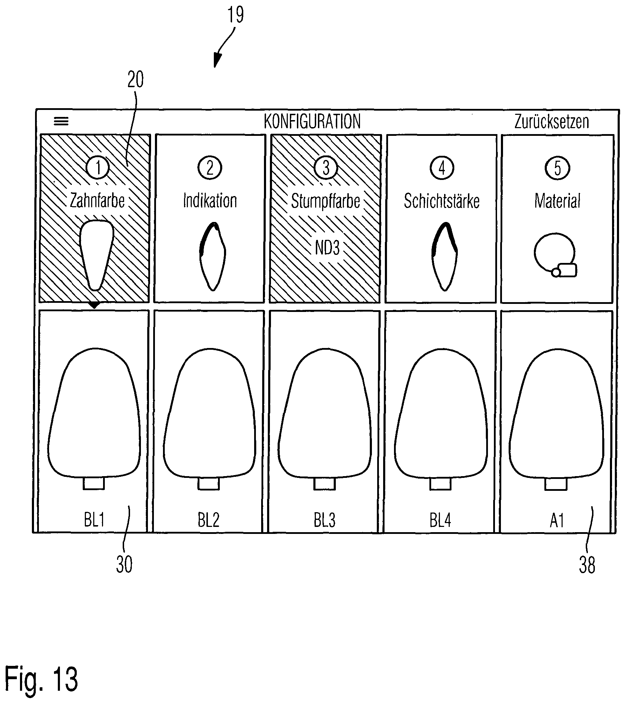

Wenn dies erfolgt ist, entsteht der modifizierte Auswahlbildschirm 19 gemäß Fig. 13, bei welchen die Zahnfarbe gemäß dem Parameterfeld 20 als aktiv markiert ist und dementsprechend die Zahnfarbe über die Auswahlfelder 30 bis 38 auswählbar ist.

## Patentansprüche

1. Verfahren zur Festlegung einer Materialfarbe einer Dentalrestauration, bei welchem die gewünschte Zahnfarbe durch den Benutzer als Ziel-Zahnfarbe (56) welche durch den Benutzer anhand eines Zahnschlüssels als die Zahnfarbe eines Nachbarzahns oder der Nachbarzähne ermittelt wird, in ein entsprechendes Auswahlfeld eingegeben wird, wobei bei der Festlegung der Materialfarbe der Dentalrestauration ausgehend von der Ziel-Zahnfarbe (56) die Materialfarbe der ausgewählten Materialien des Dentalrestaurationsmaterials basierend auf Parametern der Farbe eines Stumpfes und/oder eines Abutments, der Schichtstärke der Dentalrestauration, der Art der Dentalrestauration und gegebenenfalls der Verarbeitungstechnik, geändert wird, wobei die Festlegung der Materialfarbe der Dentalrestauration und Auswahl des passenden Dentalrestaurationsmaterials durch ein Computerprogramm gesteuert wird, und wobei sobald ein Parameter ausgewählt ist, der nächste Parameter automatisch angeboten wird, wobei die Auswahl basierend auf der Ziel-Zahnfarbe und davon abhängigen Parametern, wie der Schichtstärke, der Restaurationsart, also die Indikation und das Material eingeschränkt wird und wenn sämtliche Auswahlen getroffen sind, anstelle der Auswahlfelder die Anzeige des Ergebnisses der Materialauswahl aktiviert wird.

2. Verfahren nach Anspruch 1, **dadurch gekennzeichnet, dass** das Computerprogramm die Materialfarbe der Dentalrestauration gegenüber der Ziel-Zahnfarbe (56) in Abhängigkeit von der Schichtstärke der Dentalrestauration ändert, und zwar dahingehend, dass bei einer helleren Ziel-Zahnfarbe (56) und einem dunkleren Stumpf und einer größeren Schichtstärke eine hellere Materialfarbe festgelegt wird und bei einer dunkleren Ziel-Zahnfarbe (56) und einem helleren Stumpf bei einer geringeren Schichtstärke eine dunklere Materialfarbe festgelegt wird.

3. Verfahren nach Anspruch 1 oder 2, **dadurch gekennzeichnet, dass** bei einem dunkleren Stumpf und einer helleren Ziel-Zahnfarbe (56) ab einem vorgegebenen Helligkeitsunterschied die Ausgabe einer Materialfarbe gesperrt wird oder angegeben wird, dass eine derartige Lösung ohne Opaker ungeeignet ist.

4. Verfahren nach einem der vorhergehenden Ansprüche, **dadurch gekennzeichnet, dass** die Änderung der Materialfarbe basierend auf dem Computerprogramm in Abhängigkeit unter anderem von der Transluzenz der Dentalrestauration durchgeführt wird.

5. Verfahren nach einem der vorhergehenden Ansprüche, **dadurch gekennzeichnet, dass** die Dentalrestauration monolitisch ist, also aus einem Material bzw. einer Materialklasse besteht und eine in sich gleiche Materialfarbe aufweist.

6. Verfahren nach einem Ansprüche 1 bis 4, **dadurch gekennzeichnet, dass** die Dentalrestauration monolithisch ist und in mehrfarbigen Schichten oder Schichten mit unterschiedlicher Transluzenz aufgebaut ist und eine vestibuläre oder okklusale Schicht transluzenter bzw. heller als eine orale oder gingivale Schicht ist.

7. Verfahren nach einem der vorhergehenden Ansprüche, **dadurch gekennzeichnet, dass** das Computerprogramm gemäß Anspruch 1 die Helligkeit der Dentalrestaurations-Matrialfarbe erhöht, wenn die Stumpffarbe (44) oder Abutment-Farbe unterhalb einer vorgegebenen Helligkeitsschwelle liegt.

8. Verfahren nach einem der vorhergehenden Ansprüche, **dadurch gekennzeichnet, dass** die Festlegung der Materialfarbe der Dentalrestauration basierend auf den Parametern Ziel-Zahnfarbe (56), Stumpffarbe (44), und Schichtstärke der Dentalrestauration erfolgt sowie auch basierend auf zusätzlichen weiteren Parametern wie der Restaurationsart, also die Indikation, der Verarbeitungstechnik und der Art des Befestigungsmaterials.

9. Verfahren nach Anspruch 8, **dadurch gekennzeichnet, dass** basierend auf mindestens einer der vorstehenden Änderungsregeln eine Materialfarbe zur Auswahl, automatisch und besonders bevorzugt in einer App eines Smartphones oder in einer CAD/CAM Sofware angeboten wird.

10. Verfahren nach einem der vorhergehenden Ansprüche, **dadurch gekennzeichnet, dass** bei einer dunkleren Ziel-Zahnfarbe (56), wie C4 und einer dunklen Stumpffarbe (44) wie ND8 eine hellere Materialfarbe, die ins rötliche changiert, wie LT-B3, festgelegt wird.

11. Verfahren nach einem der vorhergehenden Ansprüche, **dadurch gekennzeichnet, dass** das vorstehende Maß für die Schichtstärke sich auf eine dünnere zentrale Stelle an der vestibulären Seite von Kronen, Veneers und Käppchen bezieht, bei Inlays und Onlays auf die dünnste okklusale Stelle.

12. Verfahren nach einem der vorhergehenden Ansprüche, **dadurch gekennzeichnet, dass** vom Computerprogramm bei Kronen, Inlays und Onlays als Indikation nur Schichtstärken größer gleich 1,0 mm angeboten werden, bei Veneers und Kappen Schichtstärken ab 0,3 mm, und dass die maximal abzudeckende Schichtstärke weniger als 2,0 mm ist, insbesondere 1,5 mm.

13. Verfahren nach einem der vorhergehenden Ansprüche, **dadurch gekennzeichnet, dass** die Auswahl der Zahnfarbe basierend auf vier oder fünf Parametern erfolgt, die in Baumstruktur vorliegen, so dass bei Auswahl eines der Parameter lediglich die hierzu passenden Bereiche (60) der anderen Parameter angeboten werden, und dass die Parameter wie die Zahnfarbe, die Indikation, die Stumpffarbe (44) und die Schichtstärke und besonders bevorzugt auch das zu verwendende Material der Dentalrestauration sind.

14. Verfahren nach einem der vorhergehenden Ansprüche, **dadurch gekennzeichnet, dass** nicht mögliche Kombinationen von Parametern vom Programm gesperrt sind oder als nicht realisierbar angezeigt sind und/oder dass basierend auf der Schichtstärke zur Optimierung des visuellen Eindrucks der zu erzeugenden Materialfarbe auf die Zahnfarben-Gruppe (A, B, C, D) bei Bedarf gedeckt wird.

15. Verfahren nach einem der vorhergehenden Ansprüche, **dadurch gekennzeichnet, dass** in einem Ergebnisbereich der verwendeten App eines Smartphones oder der CAD/CAM-Software sowohl die Ziel-Zahnfarbe (56) als auch die empfohlene Materialfarbe eingeblendet ist, wobei in dem Ergebnisbereich die Indikation grafisch angenährt eingeblendet wird.

16. Verfahren nach einem der vorhergehenden Ansprüche, **dadurch gekennzeichnet, dass** auf einem Ergebnisbildschirm (50) zusätzlich zu der optimalen und empfohlenen Materialfarbe des Dentalrestaurationsteils eine weitere alternative Farbe angezeigt und auch farblich wiedergegeben wird.

17. Verfahren nach einem der vorhergehenden Ansprüche, **dadurch gekennzeichnet, dass** auf einem Ergebnisbildschirm (50) eine freie Auswahl der Materialfarbe angeboten wird, über welche der Nutzer verschiedene Materialfarben zum visuellen Vergleich mit der Ziel-Zahnfarbe (56) einblenden kann.

## Claims

1. A method for specifying a material color of a dental restoration, wherein the desired tooth color is entered into a corresponding choice box by the user as a target tooth color (56), which color is specified by the user based on a tooth key as the tooth color of a neighboring tooth or the neighboring teeth, wherein when specifying the material color of the dental restoration based on the target tooth color (56) the material color of the selected materials of the dental restoration material is changed based on parameters of the color of a stump and/or an abutment, the layer thickness of the dental restoration, the type of dental restoration, if applicable, the processing technique, wherein specification of the material color of the dental restoration and selection of the appropriate dental restoration material is controlled by a computer program, and wherein once one parameter is selected, the next parameter is automatically provided, wherein the selection is limited based on the target tooth color and parameters dependent thereon, such as layer thickness, restoration type, i.e. the indication and the material, and when all selections have been performed, display of the result of the material selection is activated rather than activating the choice boxes.

2. The method according to claim 1, **characterized in that** the computer program changes the material color of the dental restoration with respect to the target tooth color (56) as a function of the layer thickness of the dental restoration, **in that** a lighter material color is set in case of a lighter target tooth color (56) and a darker stump and a greater layer thickness, and a darker material color is set in case of a darker target tooth color (56) and a lighter stump and a smaller layer thickness.

3. The method according to claim 1 or 2, **characterized in that**, in case of a darker stump and a lighter target tooth color (56), the material color output is blocked when exceeding a preset brightness difference or it is indicated that such a solution is unsuitable without using opacifier.

4. The method according to one of the preceding claims, **characterized in that** changing the material color is performed based on the computer program as a function of translucency of the dental restoration, among other things.

5. The method according to one of the preceding claims, **characterized in that** the dental restoration is monolithic, i.e. consisting of one material or one class of material and has an intrinsically identical material color.

6. The method according to one of the claims 1 to 4, **characterized in that** the dental restoration is monolithic and is built in multicolored layers or layers having different translucency, and a vestibular or occlusal layer is more translucent or lighter than an oral or gingival layer.

7. The method according to one of the preceding claims, **characterized in that** the computer program according to claim 1 increases the brightness of the dental restoration matrix color if the stump color (44) or abutment color is below a preset brightness threshold.

8. The method according to one of the preceding claims, **characterized in that** the material color of the dental restoration is specified based on the parameters of target tooth color (56), core color (44), and layer thickness of the dental restoration and also based on additional further parameters such as the type of restoration, i.e. the indication, the processing technique and the type of fixing material.

9. The method according to claim 8, **characterized in that**, based on at least one of the above modification rules, a material color is provided for selecting, automatically and particularly preferably in an app of a smartphone or in a CAD/CAM software.

10. The method according to one of the preceding claims, **characterized in that**, in case of a darker target tooth color (56), such as C4, and a dark stump color (44), such as ND8, a lighter material color is set, which shifts into the reddish range, such as LT-B3.

11. The method according to one of the preceding claims, **characterized in that** the above measure of layer thickness is based on a thinner central location at the vestibular side of crowns, veneers and copings, and in case of inlays and onlays is based on the thinnest occlusal location.

12. The method according to one of the preceding claims, **characterized in that** only layer thicknesses greater than or equal to 1.0 mm are provided as an indication by the computer program in case of crowns, inlays and onlays, and layer thicknesses of 0.3 mm in case of veneers and copings, and that the maximum layer thickness to be covered is less than 2.0 mm, in particular 1.5 mm.

13. The method according to one of the preceding claims, **characterized in that** the tooth shade is selected based on four or five parameters which are present in a tree structure, so that when one of the parameters is selected, only the areas (60) of the other parameters which match it are provided, and **in that** the parameters are such parameters as tooth shade, indication, stump shade (44) and layer thickness, and particularly preferably also material of the dental restoration to be used.

14. The method according to one of the preceding claims, **characterized in that** impossible combinations of parameters are blocked by the program or are indicated as not feasible and/or that, based on the layer thickness, for optimizing the visual appearance of the material color to be produced it will be adapted to the tooth color group (A, B, C, D) if required.

15. The method according to one of the preceding claims, **characterized in that** both the target tooth shade (56) and the recommended material shade are displayed in an output area of the app used on a smartphone or of the CAD/CAM software, the indication being graphically displayed in a pleasant manner in the ouput area.

16. The method according to one of the preceding claims, **characterized in that**, in addition to the optimum and recommended material color of the dental restoration part, another alternative color is displayed on an output screen (50) and is also reproduced in color.

17. The method according to one of the preceding claims, **characterized in that** a free selection of the material color is provided on an output screen (50), by which the user can display various material colors for visual comparison with the target tooth color (56).

## Revendications

1. Procédé pour déterminer une couleur de matériau d'une restauration dentaire, dans lequel la couleur de dent souhaitée est entrée par l'utilisateur comme couleur de dent cible (56), qui est déterminée par l'utilisateur sur la base d'une clé de dent comme couleur de dent d'une dent adjacente ou des dents adjacentes, dans un champ de sélection correspondant, où, lors de la détermination de la couleur du matériau de la restauration dentaire sur la base de la couleur cible de la dent (56), la couleur des matériaux sélectionnés du matériau de la restauration dentaire est modifiée sur la base des paramètres de la couleur d'un moignon et/ou d'un pilier, de l'épaisseur de la couche de la restauration dentaire, le type de restauration dentaire et, le cas échéant, la technique de traitement, où la détermination de la couleur du matériau de la restauration dentaire et la sélection du matériau de restauration dentaire approprié sont commandées par un programme informatique, et où dès qu'un paramètre est sélectionné, le paramètre suivant étant automatiquement proposé, où la sélection basée sur la couleur de la dent cible et les paramètres qui en dépendent, tels que l'épaisseur de couche, le type de restauration, c'est-à-dire l'indication et le matériau, est limitée et, lorsque toutes les sélections ont été effectuées, l'affichage du résultat de la sélection du matériau est activé à la place des champs de sélection.

2. Procédé selon la revendication 1, **caractérisé en ce que** le programme informatique modifie la couleur du matériau de la restauration dentaire par rapport à la couleur de dent cible (56) en fonction de l'épaisseur de couche de la restauration dentaire, de sorte qu'une couleur de matériau plus claire est déterminée dans le cas d'une couleur de dent cible plus claire (56) et d'un moignon plus sombre et d'une épaisseur de couche plus importante, et une couleur de matériau plus sombre est déterminée dans le cas d'une couleur de dent cible plus sombre (56) et d'un moignon plus clair et d'une épaisseur de couche plus faible.

3. Procédé selon la revendication 1 ou 2, **caractérisé en ce que**, dans le cas d'un moignon plus sombre et d'une teinte de dent cible plus claire (56), la sortie d'une teinte de matériau est bloquée au-dessus d'une différence de luminosité prédéterminée ou il est indiqué qu'une telle solution est inappropriée sans opaque.

4. Procédé selon l'une des revendications précédentes, **caractérisée en ce que** le changement de couleur du matériau est effectué sur la base du programme informatique en fonction, entre autres, de la translucidité de la restauration dentaire.

5. Procédé selon l'une des revendications précédentes, **caractérisée en ce que** la restauration dentaire est monolithique, c'est-à-dire qu'elle est constituée d'un seul matériau ou d'une seule classe de matériau et qu'elle présente une couleur de matériau intrinsèquement identique.

6. Procédé selon l'une des revendications 1 à 4, **caractérisée en ce que** la restauration dentaire est monolithique et est constituée de couches multicolores ou de couches de translucidité différente et qu'une couche vestibulaire ou occlusale est plus translucide ou plus légère qu'une couche buccale ou gingivale.

7. Procédé selon l'une quelconque des revendications précédentes, **caractérisée en ce que** le programme informatique selon la revendication 1 augmente la luminosité de la couleur de matériau de restauration dentaire lorsque la couleur du moignon (44) ou la couleur du pilier est inférieure à un seuil de luminosité prédéterminé.

8. Procédé selon l'une des revendications précédentes, **caractérisé en ce que** la couleur du matériau de la restauration dentaire est déterminée sur la base des paramètres de la couleur de la dent cible (56), de la couleur du noyau (44) et de l'épaisseur de la couche de la restauration dentaire, et également sur la base d'autres paramètres supplémentaires tels que le type de restauration, c'est-à-dire l'indication, la technique de traitement et le type de matériau de fixation.

9. Procédé selon la revendication 8, **caractérisée en ce que**, sur la base d'au moins une des règles de modification précédentes, une couleur de matériau est proposée pour la sélection, automatiquement et particulièrement de préférence dans une application d'un smartphone ou dans un logiciel de CAO/FAO.

10. Procédé selon l'une quelconque des revendications précédentes, **caractérisée en ce que** dans le cas d'une teinte de dent cible plus sombre (56), telle que C4, et d'une teinte de matrice sombre (44), telle que ND8, une teinte de matériau plus claire qui passe au rougeâtre, telle que LT-B3, est définie.

11. Méthode selon l'une des revendications précédentes, **caractérisée en ce que** la mesure précédente de l'épaisseur de la couche se réfère à un emplacement central plus mince sur le côté vestibulaire des couronnes, facettes et chapes, dans le cas d'inlays et d'onlays à l'emplacement occlusal le plus mince.

12. Procédé selon l'une des revendications précédentes, **caractérisé en ce que** seules les épaisseurs de couche supérieures ou égales à 1,0 mm sont proposées comme indication par le programme informatique dans le cas des couronnes, des inlays et des onlays, et les épaisseurs de couche à partir de 0,3 mm dans le cas des facettes et des chapes, et **en ce que** l'épaisseur de couche maximale à couvrir est inférieure à 2,0 mm, en particulier à 1,5 mm.

13. Procédé selon l'une des revendications précédentes, **caractérisée en ce que** la sélection de la teinte de la dent est basée sur quatre ou cinq paramètres qui sont présents dans une structure arborescente, de sorte que lorsque l'un des paramètres est sélectionné, seules les zones (60) des autres paramètres correspondant à celui-ci sont proposées, et **en ce que** les paramètres sont tels que la teinte de la dent, l'indication, la teinte du moignon (44) et l'épaisseur de la couche, et de manière particulièrement préférée également le matériau de la restauration dentaire à utiliser.

14. Procédé selon l'une des revendications précédentes, **caractérisée en ce que** les combinaisons de paramètres impossibles sont bloquées par le programme ou sont indiquées comme non réalisables et/ou que, sur la base de l'épaisseur de la couche pour l'optimisation de l'impression visuelle de la teinte du matériau à produire sur le groupe de teinte de la dent (A, B, C, D), est couvert si nécessaire.

15. Procédé selon l'une des revendications précédentes, **caractérisée en ce que**, dans une zone de résultat de l'application utilisée d'un smartphone ou du logiciel CAO/FAO, la teinte de dent cible (56) et la teinte de matériau recommandée sont toutes deux affichées, où l'indication est représentée graphiquement de manière approximative dans la zone de résultat.

16. Procédé selon l'une des revendications précédentes, **caractérisée en ce que** sur un écran de résultat (50), en plus de la couleur optimale et recommandée du matériau de la partie de la restauration dentaire, une autre couleur alternative est affichée et également reproduite en couleur.

17. Procédé selon l'une des revendications précédentes, **caractérisé en ce qu'**une sélection libre de la couleur du matériau est proposée sur un écran de résultat (50), par lequel l'utilisateur peut afficher différentes couleurs de matériau pour une comparaison visuelle avec la couleur de la dent cible (56).
